# EUROPEAN PATENT APPLICATION

(11) **EP 3 584 523 A1**
(43) Date of publication of application: **25.12.2019**
(21) Application number: 18869453.3
(22) Date of filing: 02.08.2018
(51) Int. Cl.: F25D 11/02, F25D 23/12

(54) **REFRIGERATOR FOR PRESERVATION BY MEANS OF ELECTRIC FIELD**

(30) Priority: 11.05.2018 CN 201810451269
(71) Applicant: Changhong Meiling Co., Ltd., Hefei Economic And Technological Development Zone Hefei Anhui 230601 (CN)
(72) Inventor: WEI, Bangfu, Hefei, Anhui 23061 (CN); JIANG, Feng, Hefei, Anhui 23061 (CN); HU, Haimei, Hefei, Anhui 23061 (CN); WANG, Guanglong, Hefei, Anhui 23061 (CN)
(74) Representative: Patentanwaltskanzlei Matschnig & Forsthuber OG
(86) International application number: PCT/CN2018/098213
(87) International publication number: WO 2019/214092

(57) **Abstract**

The present invention relates to the technical field of keeping freshness with electric field for refrigerators, and discloses a freshness-keeping refrigerator using electric field. The present invention includes a plurality of storage compartments and electric field releasing devices, and a voltage regulation device. The electric field releasing device is arranged in a separation layer of two adjacent storage compartments, or in a heat-insulating layer of a storage compartment, at a side close to the storage compartment, or in an edge foamed layer, at a side close to a storage compartment. The plurality of electric field releasing devices are in equipotential connection and are further connected in series to an output terminal of the voltage regulation device. The present invention regulates an electricity discharging strength of the electric field releasing device by the voltage regulation device. While it works, the electric field releasing device generates an electric field, which resonates with water molecules in a food so as to inhibit growth of a microbe, kill germs, decompose ethylene, inhibit activity of a food enzyme, and improve permeability of a cell membrane. Thus, losses of cellsap and umami constituents are greatly reduced, thereby achieving freshness-keeping of the food and a reasonable distribution of electric fields in a multi-compartment refrigerator. As a result, all compartments of the refrigerator are provided with uniform freshness-keeping, and the present invention has a wide application scope.

## Description

The present application claims priority to Chinese Patent Application No. 201810451269.X, filed with the Chinese Patent Office on May 11, 2018 and entitled "FRESHNESS-KEEPING REFRIGERATOR USING ELECTRIC FIELD", which is incorporated herein by reference in its entirety.

### TECHNICAL FIELD

The present invention relates to the technical field of keeping freshness with electric field for refrigerators, and in particular, to a freshness-keeping refrigerator using electric field.

### BACKGROUND OF THE INVENTION

Research suggests that processing fruits and vegetables with an electric field can significantly maintain their qualities and accelerate food freezing/unfreezing, which is a new green technology for food preservation.

A Chinese patent (CN203787768U) discloses a device for generating space electric field, which includes a transformer, an electricity discharging source, a feedback control circuit, and an output controller. The feedback control circuit is connected to a terminal of a primary coil and a terminal of a secondary coil of the transformer, respectively. The output controller is connected to the other terminal of the secondary coil of the transformer, and is further connected to the electricity discharging source. The patent discloses a method for generating electric field and a device for outputting electric field by using a feedback control circuit. According to the patent, low-frequency vibration is applied to the electricity discharging source, so that the electricity discharging source steadily discharges static electricity to where there is a low potential. As a result, an electric field is formed in a wide region around the electricity discharging source, and when placed in the electric field formed by the electricity discharging source, food can be kept fresh without direct contact with the electricity discharging source. Therefore, it can be achieved that food in the wide region can be kept fresh.

Currently, as for electric field freshness-keeping technologies, there is a lack of a method, for a refrigerator having a relatively large space, to ensure sufficient strength as well as reasonable distribution of the electric field. A freshness-keeping refrigerator using electric field is thus provided, which can keep freshness for all compartments of the refrigerator.

### SUMMARY OF THE INVENTION

The present invention is directed to a freshness-keeping refrigerator using electric field. Electric field releasing devices are arranged in a separation layer of two adjacent storage compartments, or in a heat-insulating layer of a storage compartment, at a side close to the storage compartment, or in an edge foam layer, at a side close to a storage compartment, and the electric field releasing devices are in equipotential connection with each other and are further connected in series to an output terminal of a voltage regulation device. As a result, a problem is resolved that electric field strength is unreasonably distributed for an existing multi-compartment refrigerator and freshness-keeping effects are not uniform for the compartments of the refrigerator.

In order to resolve the foregoing problem, the present invention is implemented by the following technical solutions:

The present invention discloses a freshness-keeping refrigerator using electric field, which comprises a plurality of storage compartments and electric field releasing devices, and a voltage regulation device. The electric field releasing devices are arranged in a separation layer of two adjacent storage compartments, or in a heat-insulating layer of a storage compartment, at a side close to the storage compartment, or in an edge foam layer, at a side close to the storage compartment. The voltage regulation device is arranged at a top of the refrigerator, or at a back of the refrigerator, or within a compressor cabin. The plurality of electric field releasing devices are in equipotential connection, and the plurality of electric field releasing devices in equipotential connection are connected in series to an output terminal of the voltage regulation device.

Further, the electric field releasing device includes an electricity discharging source and a safe insulating sleeve, where the electricity discharging source is a conductive film, a conductive plate, a conductive band or a conductive stick, and is arranged within the safe insulating sleeve.

Further, the output terminal of the voltage regulation device has a voltage of 1200-4000V with a frequency of 30-100Hz, and the voltage regulation device is an autotransformer or a switching mode power supply device.

Further, the electric field releasing devices are connected to be equipotential in a manner of single-terminal input connection or multi-terminal input connection.

Further, the electric field releasing device in the separation layer is arranged at a middle of the separation layer or at a side close to a storage compartment having a large volume.

Further, when the refrigerator works, an electricity discharging strength of the electric field releasing device is regulated by the voltage regulation device. While it works, the electric field releasing device generates an electric field, which resonates with water molecules in a food so as to inhibit growth of a microbe, kill germs, decompose ethylene, inhibit activity of a food enzyme, and improve permeability of a cell membrane.

Further, the refrigerator includes a refrigerating chamber, a temperature-changing chamber and a freezing chamber, where the refrigerating chamber includes a plurality of storage compartments, the temperature-changing chamber includes a plurality of storage compartments, and the freezing chamber includes a plurality of storage compartments.

The present invention has the following beneficial effects:
1. The present invention regulates the electricity discharging strength of the electric field releasing device by the voltage regulation device. While it works, the electric field releasing device generates an electric field resonating with water molecules in the food, which serves to inhibit growth of a microbe, kill germs, decompose ethylene, inhibit activity of a food enzyme, and improve permeability of a cell membrane. Thus, losses of cellsap and umami constituents are greatly reduced, thereby achieving freshness-keeping of the food.
2. The electric field releasing devices in the present invention are in equipotential connection and are further connected in series to the output terminal of the voltage regulation device, which ensures a reasonable distribution of the electric field in a multi-compartment refrigerator and provides all compartments of the refrigerator with uniform freshness-keeping. This solution is safe and reliable, has a wide application scope, and can be extended to be applied in refrigerators of various space sizes and structures.

Certainly, there is no need to produce all of the foregoing advantages at the same time to implement any product of the present invention.

### BRIEF DESCRIPTION OF THE DRAWINGS

In order to describe the technical solutions of the embodiments of the present invention more clearly, the accompanying drawings required for describing the embodiments are briefly illustrated below. Apparently, the accompanying drawings in the descriptions below merely represent some embodiments of the present invention, and other accompanying drawings may also be obtained by one of ordinary skills in the art according to these accompanying drawings without creative efforts.
FIG. 1 is a schematic structural diagram illustrating a freshness-keeping refrigerator using electric field according to the present invention;
FIG. 2 is a schematic structural diagram illustrating a first connection between a voltage regulation device and an electric field releasing device according to the present invention;
FIG. 3 is a schematic structural diagram illustrating a second connection between a voltage regulation device and an electric field releasing device according to the present invention; and
FIG. 4 is a schematic structural diagram illustrating an electric field releasing device according to the present invention.

In the accompanying drawings, the components represented by respective reference numerals are listed as follows:
1-compartment 1, 2-compartment 2, 3-compartment 3, 4-voltage regulation device, 5-electric field releasing device, 51-safe insulating sleeve, 52-electricity discharging source.

### DETAILED DESCRIPTION OF THE EMBODIMENTS

The technical solutions in the embodiments of the present invention are clearly and completely described below in combination with the accompanying drawings in the embodiments of the present invention. Obviously, the described embodiments are merely a part, not all, of the embodiments of the present invention. According to the embodiments in the present invention, all other embodiments obtained by one of ordinary skill in the art without creative efforts would fall within the protection scope of the present invention.

In the description of the present invention, it should be understood that, for the terms indicating place or position relationships, such as "adjacent", "close to", "a side", "thickness", "middle position", "in", "within" and the like, are used only for convenience of describing the present invention and for simplifying the descriptions, rather than indicating or implying that the components or elements referred to must have a particular place or must be constructed and operated in a particular place. Therefore, they should not be construed as limiting the present invention.

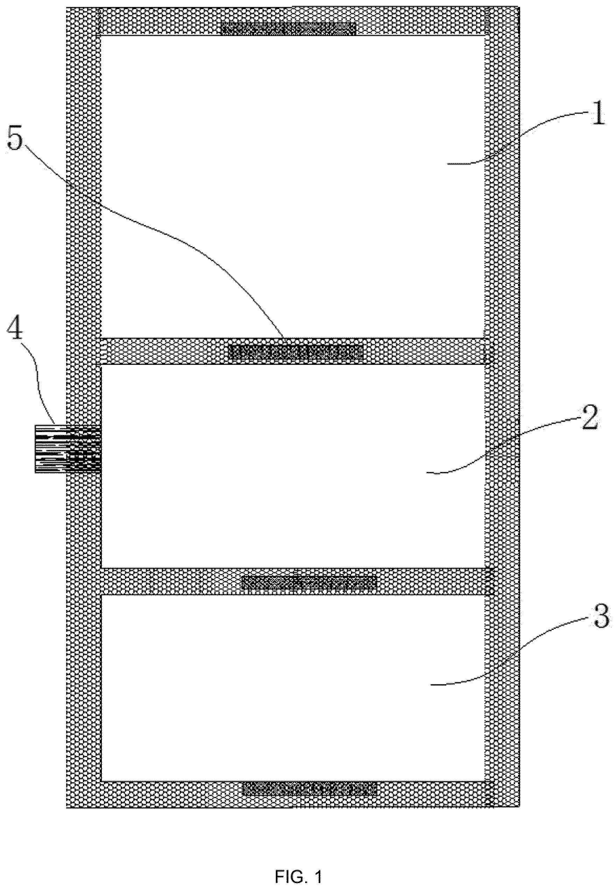

As shown in Figs. 1-3, the present invention discloses a freshness-keeping refrigerator using electric field, which includes a plurality of storage compartments, electric field releasing devices 5, and a voltage regulation device 4. The electric field releasing device 5 is arranged in a separation layer of two adjacent storage compartments, or is arranged in a heat-insulating layer of a storage compartment, at a side close to the storage compartment, or is arranged in an edge foam layer, at a side close to the storage compartment. The voltage regulation device 4 is arranged at a top of the refrigerator, or at a back of the refrigerator, or within a compressor cabin. The plurality of electric field releasing devices 5 are in equipotential connection with each other, and the plurality of electric field releasing devices 5 in equipotential connection with each other are connected in series to an output terminal of the voltage regulation device 4.

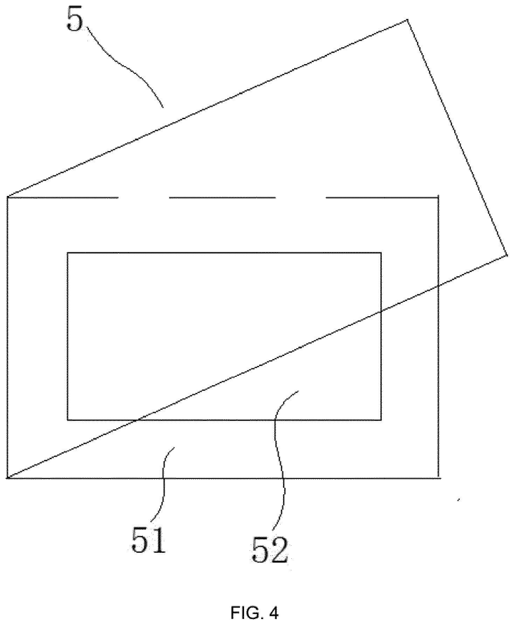

As shown in FIG. 4, the electric field releasing device 5 includes an electricity discharging source 52 and a safe insulating sleeve 51. The electricity discharging source 52 is a conductive film, a conductive plate, a conductive band, or a conductive stick. The electricity discharging source 52 is arranged within the safe insulating sleeve 51.

The output terminal of the voltage regulation device 4 has a voltage of 1200-4000V with a frequency of 30-100Hz. The voltage regulation device 4 is an autotransformer or a switching mode power supply (SMPS) device.

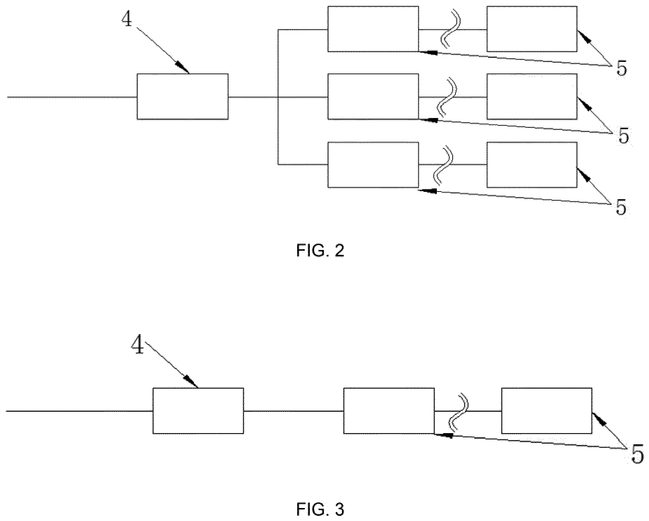

The equipotential connection of the electric field releasing devices 5 is provided in a manner of single-terminal input connection or multi-terminal input connection. The single-terminal input connection is shown in FIG. 3, and the multi-terminal input connection is shown in FIG. 2.

The electric field releasing device 5 in the separation layer is arranged at a middle of the separation layer or at a side close to a storage compartment having a large volume.

An electricity discharging strength of the electric field releasing device 5 is regulated by the voltage regulation device 4 when the refrigerator works. While the electric field releasing device 5 works, it generates an electric field, which resonates with water molecules in food, so as to inhibit growth of a microbe, kill germs, decompose ethylene, inhibit activity of a food enzyme, and improve permeability of a cell membrane.

The refrigerator includes a refrigerating chamber, a temperature-changing chamber, and a freezing chamber. The refrigerating chamber includes a plurality of storage compartments. The temperature-changing chamber includes a plurality of storage compartments. The freezing chamber includes a plurality of storage compartments.

### Specific Embodiment 1

As shown in FIG. 1, the refrigerator of the present invention includes a refrigerating chamber, a temperature-changing chamber, and a freezing chamber. The refrigerating chamber includes a compartment 1, the temperature-changing chamber includes a compartment 2, and the freezing chamber includes a compartment 3. The electric field releasing device 5 is arranged at the middle of the separation layer of two adjacent storage compartments. The electric field releasing devices 5 are connected to be equipotential in a manner of single-terminal input connection. The electric field releasing devices 5 in equipotential connection are connected in series to the output terminal of the voltage regulation device 4. The voltage regulation device 4 is arranged at the top of the refrigerator, and its output terminal has a voltage of 1200-4000V with a frequency of 30-100Hz. The voltage regulation device 4 is an autotransformer. The electric field releasing device 5 includes an electricity discharging source 52 and a safe insulating sleeve 51, where the electricity discharging source 52 is a conductive film and arranged within the safe insulating sleeve 51. When the refrigerator works, the electricity discharging strength of the electric field releasing device 5 is regulated by the voltage regulation device 4. When it works, the electric field releasing device 5 generates an electric field, which resonates with water molecules in the food, so as to inhibit growth of a microbe, kill germs, decompose ethylene, inhibit activity of a food enzyme, and improve permeability of a cell membrane. Thus, losses of cellsap and umami constituents are greatly reduced, thereby achieving freshness-keeping of the food.

### Specific Embodiment 2

The refrigerator of the present invention includes a refrigerating chamber, a temperature-changing chamber, and a freezing chamber. The refrigerating chamber includes three storage compartments, the temperature-changing chamber includes two storage compartments, and the freezing chamber includes three storage compartments. The electric field releasing device 5 is arranged in the separation layer of two adjacent storage compartments, at a side close to the storage compartment having a large volume. The electric field releasing devices 5 are connected to be equipotential in a manner of multi-terminal input connection. The electric field releasing devices 5 in equipotential connection are connected in series to the output terminal of the voltage regulation device 4. The voltage regulation device 4 is arranged at a back of the refrigerator, and its output terminal has a voltage of 1200-4000V and a frequency of 30-100Hz. The voltage regulation device 4 is a switching mode power supply (SMPS) device. The electric field releasing device 5 includes an electricity discharging source 52 and a safe insulating sleeve 51, where the electricity discharging source 52 is a conductive stick and is arranged within the safe insulating sleeve 51. When the refrigerator works, the electricity discharging strength of the electric field releasing device 5 is regulated by the voltage regulation device 4. When it works, the electric field releasing device 5 generates an electric field, which resonates with water molecules in a food, so as to inhibit growth of a microbe, kill germs, decompose ethylene, inhibit activity of a food enzyme, and improve permeability of a cell membrane. Thus, losses of the cellsap and umami constituents are greatly reduced, thereby achieving freshness-keeping of the food. Also, a reasonable distribution of electric fields is provided for a multi-compartment refrigerator, and thus uniform freshness-keeping is provided for all compartments of the refrigerator. This solution is safe and reliable, has a wide application scope, and can be expanded to be applied in refrigerators of various space sizes and structures.

### Specific embodiment 3

The refrigerator of the present invention includes a refrigerating chamber, a temperature-changing chamber, and a freezing chamber. The refrigerating chamber includes five storage compartments, the temperature-changing chamber includes two storage compartments, and the freezing chamber includes four storage compartments. The electric field releasing device 5 is arranged in an insulating layer of a storage compartment, at a side close to the storage compartment. The electric field releasing devices 5 are connected to be equipotential in a manner of multi-terminal input connection. The electric field releasing devices 5 in equipotential connection are connected in series to the output terminal of the voltage regulation device 4. The voltage regulation device 4 is arranged within a compressor cabin, and its output terminal has a voltage of 1200-4000V with a frequency of 30-1 00Hz. The voltage regulation device 4 is an autotransformer. The electric field releasing device 5 includes an electricity discharging source 52 and a safe insulating sleeve 51, where the electricity discharging source 52 is a conductive band and arranged within the safe insulating sleeve 51. When the refrigerator works, the electricity discharging strength of the electric field releasing device 5 is regulated by the voltage regulation device 4. When it works, the electric field releasing device 5 generates an electric field, which resonates with water molecules in a food, so as to inhibit growth of a microbe, kill germs, decompose ethylene, inhibit activity of a food enzyme, and improve permeability of a cell membrane. As a result, uniform freshness-keeping is provided for all compartments of the refrigerator.

### Specific embodiment 4

The refrigerator of the present invention includes a refrigerating chamber, a temperature-changing chamber, and a freezing chamber. The refrigerating chamber includes two storage compartments, the temperature-changing chamber includes four storage compartments, and the freezing chamber includes three storage compartments. The electric field releasing device 5 is arranged in the edge foam layer, at a side close to the storage compartment. The electric field releasing devices 5 are connected to be equipotential in a manner of single-terminal input connection. The electric field releasing devices 5 in equipotential connection are connected in series to the output terminal of the voltage regulation device 4. The voltage regulation device 4 is arranged within the compressor cabin of the refrigerator and its output terminal has a voltage of 1200-4000V with a frequency of 30-100Hz. The voltage regulation device 4 is an autotransformer. The electric field releasing device 5 includes an electricity discharging source 52 and a safe insulating sleeve 51, where the electricity discharging source 52 is a conductive plate and arranged within the safe insulating sleeve 51. When the refrigerator works, the electricity discharging strength of the electric field releasing device 5 is regulated by the voltage regulation device 4, so that a reasonable distribution of electric field is achieved in the multi-compartment refrigerator, and uniform freshness-keeping is provided for all compartments of the refrigerator. This solution is safe and reliable, has a wide application scope, and can be expanded to be applied in refrigerators of various space sizes and structures. When it works, the electric field releasing device 5 generates an electric field, which resonates with water molecules in the food, so as to inhibit growth of a microbe, kill germs, decompose ethylene, inhibit activity of a food enzyme, and improve permeability of a cell membrane. Thus, losses of cellsap and umami constituents are greatly reduced, thereby achieving freshness-keeping of the food.

In the description of this specification, descriptions with reference to the terms such as "an embodiment", "example", and "specific embodiment" mean that specific features, structures, materials, or characteristics described in combination with the embodiment or example are included in at least one embodiment or example of the present invention. In this specification, exemplary statements of the foregoing terms do not necessarily refer to the same embodiments or examples. Moreover, the described specific features, structures, materials, or characteristics can be combined in a proper manner in any one or multiple embodiments or examples.

The preferred embodiments of the present invention disclosed above are merely provided for helping interpreting the present invention. The preferred embodiments have not describe all details in detail, and do not intend to limit the present invention to the described specific implementations. Obviously, according to the disclosure of this specification, a lot of modifications and changes are possible. The embodiments are selected and described in detail in this specification to better explain the principle and applications of the present invention, so that those skilled in the art can better understand and utilize the present invention. The present invention is only defined by the claims and the entire scope and equivalents thereof.

## Claims

1. A freshness-keeping refrigerator using electric field, **characterized by** comprising a plurality of storage compartments and electric field releasing devices (5), and a voltage regulation device (4), wherein
the electric field releasing device (5) is arranged in a separation layer for two adjacent ones of the plurality of storage compartments, or arranged in a heat-insulating layer or an edge foam layer of the storage compartment, on a side close to the storage compartment;
the voltage regulation device (4) is arranged on a top or on a back of the refrigerator, or within a compressor cabin; and
the plurality of electric field releasing devices (5) are connected to be equipotential, and the plurality of electric field releasing devices (5) in equipotential connection are connected in series to an output terminal of the voltage regulation device (4).

2. The freshness-keeping refrigerator using electric field according to claim 1, **characterized in that** the electric field releasing device (5) comprises an electricity discharging source (52) and a safe insulating sleeve (51), and the electricity discharging source (52) is a conductive film, a conductive plate, a conductive band, or a conductive stick, and is arranged in the safe insulating sleeve (51).

3. The freshness-keeping refrigerator using electric field according to claim 1, **characterized in that** the output terminal of the voltage regulation device (4) has a voltage of 1200-4000V with a frequency of 30-100Hz, and the voltage regulation device (4) is an autotransformer or a switching mode power supply (SMPS) device.

4. The freshness-keeping refrigerator using electric field according to claim 1, **characterized in that** the electric field releasing devices (5) are connected to be equipotential in a manner of single-terminal input connection or multi-terminal input connection.

5. The freshness-keeping refrigerator using electric field according to claim 1, **characterized in that** the electric field releasing device (5) in the separation layer is arranged in a middle of the separation layer or on a side close to the storage compartment having a large volume.

6. The freshness-keeping refrigerator using electric field according to claim 1, **characterized in that**, an electricity discharging strength of the electric field releasing device (5) is regulated by the voltage regulation device (4) when the refrigerator works, and the electric field releasing device (5) generates the electric field, while working, which resonates with water molecules in food so as to inhibit growth of a microbe, kill germs, decompose ethylene, inhibit activity of a food enzyme, and improve permeability of a cell membrane.

7. The freshness-keeping refrigerator using electric field according to claim 1, **characterized in that** the refrigerator comprises a refrigerating chamber, a temperature-changing chamber and a freezing chamber, wherein the refrigerating chamber comprises some of the plurality of storage compartments, the temperature-changing chamber comprises some of the plurality of the storage compartments, and the freezing chamber comprises some of the plurality of the storage compartments.
